# EUROPÄISCHE PATENTSCHRIFT

(11) **EP 1 884 450 B1**
(45) Veröffentlichungstag und Bekanntmachung des Hinweises auf die Patenterteilung: **13.10.2010**
(21) Anmeldenummer: 07108909.8
(22) Anmeldetag: 25.05.2007
(51) Int. Cl.: B62D 6/00, B60W 30/02

(54) **Fahrdynamikregler mit einem in der Lenkung angeordneten Drehmomentensensor**
Driving dynamics regulator with a torque sensor fitted in the steering mechanism
Régulateur dynamique de conduite doté d'un capteur d'accouplement orienté

(30) Priorität: 25.07.2006 DE 102006034381
(43) Veröffentlichungstag der Anmeldung: 06.02.2008
(73) Patentinhaber: ROBERT BOSCH GMBH, 70442 Stuttgart (DE)
(72) Erfinder: Moerbe, Matthias, 74360, Ilsfeld-Helfenberg (DE)

(56) Entgegenhaltungen:
- EP-A- 0 482 374
- WO-A-2005/092690
- DE-A1- 10 060 287
- US-A- 5 257 828

## Beschreibung

### Stand der Technik

Die Erfindung betrifft einen Fahrzeugregler zum Stabilisieren eines Fahrzeugs in fahrdynamischen Grenzsituationen gemäß dem Oberbegriff des Patentanspruchs 1, sowie ein entsprechendes Verfahren gemäß dem Oberbegriff des Patentanspruchs 7.

Fahrzeugregler, wie z.B. ESP oder ABS, dienen dazu, die Kontrollierbarkeit von Fahrzeugen, insbesondere beim Über- oder Untersteuern des Fahrzeugs zu verbessern. Wenn die Regelabweichung einen vorgegebenen Schwellenwert überschreitet, greift der Fahrzeugregler mittels eines Aktuators, typischerweise mittels der Radbremsen und/oder eines Lenkstellers in den Fahrbetrieb ein, um das Fahrzeug zu stabilisieren.

Bekannte Fahrzeugregler umfassen ein Steuergerät mit einem Regelalgorithmus, der üblicherweise einen so genannten Beobachter umfasst, der das tatsächliche Fahrverhalten (Ist-Verhalten) des Fahrzeugs sensorisch überwacht und gleichzeitig das vom Fahrer gewünschte Fahrverhalten (Soll-Verhalten) ermittelt. Die Sensorik bekannter Fahrzeugregler umfasst in der Regel einen Drehratensensor, Querbeschleunigungssensoren und einen Lenkwinkelsensor zur Fahrzustands-Bestimmung. Diese so genannten Inertialsensoren sind jedoch relativ teuer. Darüber hinaus sind die Algorithmen bekannter Fahrzeugregler relativ aufwendig und komplex.

Aus der WO 2005/092690 A1 ist ein Verfahren nach dem Oberbegriff des Anspruchs 7 sowie eine Vorrichtung nach dem Oberbegriff des Anspruchs 1 zur Berechnung der Seitenkraft in einem Kraftfahrzeug mit einem elektromechanischen oder elektrohydraulischen Lenksystem bekannt. Das Verfahren umfasst die folgenden Schritte: Zunächst wird eine Lenkstangenkraft erfasst, aus der ein gesamtes Rückstellmoment berechnet wird. Das gesamte Rückstellmoment umfasst Rückstellmomente, die von unterschiedlichen auf die Räder einwirkenden Kräften erzeugt werden. Zu diesen Rückstellmomenten gehört auch ein durch Seitenkraft verursachtes Rückstellmoment sowie weitere Rückstellmomente. Die weiteren Rückstellmomente werden auf Grundlage von Messwerten quantitativ erfasst und von dem gesamten Rückstellmoment abgezogen, um das durch Seitenkraft verursachte Rückstellmoment zu bestimmen. Schließlich wird aus dem durch Seitenkraft verursachten Rückstellmoment die Seitenkraft ermittelt.

### Offenbarung der Erfindung

Es ist die Aufgabe der vorliegenden Erfindung, einen Fahrzeugregler zum Stabilisieren eines Fahrzeugs, sowie ein entsprechendes Verfahren zu schaffen, das einfach realisiert und kostengünstig ist, aber dennoch sehr zuverlässig arbeitet.

Gelöst wird diese Aufgabe gemäß der Erfindung durch die im Patentanspruch 1 sowie im Patentanspruch 7 angegebenen Merkmale. Weitere Ausgestaltungen der Erfindung sind Gegenstand von Unteransprüchen.

Ein wesentlicher Aspekt der Erfindung besteht darin, das Fahrzeugverhalten im fahrdynamischen Grenzbereich mit Hilfe eines in der Lenkung angeordneten Drehmomentensensors zu erkennen und basierend darauf einen Stelleingriff auszulösen, wenn das Fahrverhalten von einem Soll-Verhalten zu stark abweicht. Der erfindungsgemäße Fahrzeugregler umfasst eine Einheit, z.B. einen Beobachter-Algorithmus, der das Signal des Drehmomentensensors auswertet und auf Grundlage des Sensorsignals ein Über- oder Untersteuern des Fahrzeugs erkennt.

Die Regelung des Fahrzeugverhaltens beruht dabei auf der Erkenntnis, dass sich die an den Rädern wirkenden Rad-Querkräfte schlagartig ändern, wenn das Fahrzeug aus dem stabilen Fahrzustand heraus in eine Situation gerät, in der es über-oder untersteuert. Die Änderung der Querkräfte F_{S} wird über die Lenkung auf das Lenkrad übertragen und kann vom Fahrer als plötzliche Abnahme oder Zunahme des Lenkmoments haptisch erfasst werden. Diese Momentenänderung wird erfindungsgemäß mittels eines in der Lenkung angeordneten Drehmomentensensors gemessen, der somit ein Signal liefert, das direkt ein Maß für die an den Rädern wirkenden Querkräfte ist. Durch einen Vergleich des gemessenen Ist-Werts mit einem zu erwartenden Soll-Wert kann somit das Über-oder Untersteuern des Fahrzeugs in einfacher Weise erkannt werden. Der erfindungsgemäße Fahrzeugregler mit Drehmomentensensor bzw. das erfindungsgemäße Verfahren haben somit den wesentlichen Vorteil, dass das Fahrzeugverhalten in fahrdynamischen Grenzsituationen sehr einfach und kostengünstig, ohne Einsatz eines Gierraten- oder Querbeschleunigungssensors, bestimmt werden kann.

Der Fahrzeugregler umfasst vorzugsweise eine Einheit, insbesondere einen Beobachter, der aus dem Drehmomentensignal einen Ist-Wert definiert und auf Grundlage des Fahrerwunsches (Fahrpedalstellung, Fahrer-Lenkwinkel) einen Soll-Wert berechnet. Der Ist-Wert ist, wie erwähnt, ein Maß für die an einem Rad wirkende Querkraft. Der Soll-Wert ist dagegen ein Maß für die im stabilen Fahrzustand zu erwartende Rad-Querkraft und wird vorzugsweise auf Grundlage der aktuellen Fahrzeuggeschwindigkeit und des aktuellen Lenkwinkels, sowie gegebenenfalls weiterer Zustandsgrößen und Parameter berechnet. Aus der Abweichung zwischen dem Ist- und dem Soll-Wert kann somit ein Über- oder Untersteuern des Fahrzeugs erkannt werden. Soll- und Ist-Wert werden vorzugsweise einem Zustandsregler zugeführt, der einen automatischen Stelleingriff auslöst, wenn die Regelabweichung einen vorgegebenen Schwellenwert überschreitet. Der Stelleingriff kann z.B. mit Hilfe der Radbremsen und/oder eines Lenkstellers ausgeführt werden.

Die Auslöseschwelle für einen Stelleingriff ist vorzugsweise geschwindigkeitsabhängig, wobei die Auslöseschwelle bei hohen Geschwindigkeiten grundsätzlich geringer ist als bei niedrigen Geschwindigkeiten. Dadurch kann die prinzipiell höhere Unfallgefahr bei hohen Geschwindigkeiten berücksichtigt werden.

In Fahrzeugen mit einer elektromotorisch unterstützten Lenkung (EPS: Electric powered steering) wird vorzugsweise der Drehmomentensensor, der ohnehin in der EPS verbaut ist, als Sensor für die erfindungsgemäße Fahrzustandserkennung genutzt. Dadurch können weitere Kosten eingespart werden.

### Kurze Beschreibung der Zeichnungen

Die Erfindung wird nachstehend anhand der beigefügten Zeichnungen beispielhaft näher erläutert. Es zeigen:
- Fig. 1: einen Fahrzeugregler mit Drehmomentensensor gemäß einer Ausführungsform der Erfindung;
- Fig. 2a: den schematischen Verlauf der Rad-Querkräfte bei verschiedenen Kurvenradien;
- Fig. 2b: den Verlauf der Rad-Querkräfte, wenn das Fahrzeug untersteuert;
- Fig. 2c: den Verlauf der Rad-Querkräfte, wenn das Fahrzeug übersteuert; und
- Fig. 3: den Verlauf der Auslöseschwellen des Fahrzeugreglers von Fig. 1.

### Ausführungsform der Erfindung

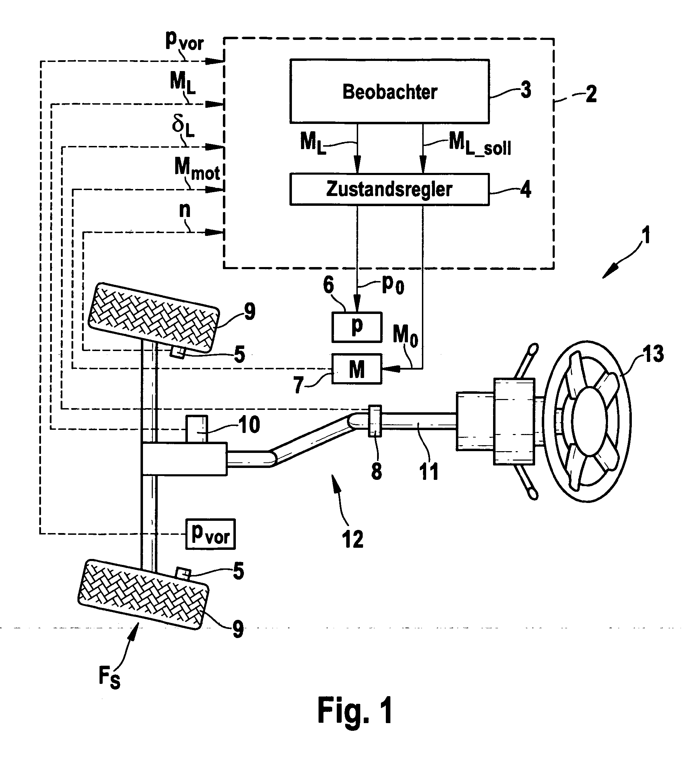

Fig. 1 zeigt eine schematische Ansicht des gesamten Reglersystems eines Fahrdynamikreglers. Das Gesamtsystem 1 umfasst ein Steuergerät 2 mit verschiedenen Algorithmen 3, 4 zur Durchführung der Fahrzeugregelung. Die Algorithmen umfassen insbesondere einen Beobachter 3, der aus verschiedenen Messgrößen, nämlich den Rad-Drehzahlen n, dem vom Fahrer gewünschten Lenkwinkel δ_{L}, der Fahrpedalstellung Mₘₒₜ und dem aktuellen Bremsdruck P_{VOR} einen Soll-Wert der Regelung M_{L_Soll} berechnet, sowie einen Zustandsregler 4. Der Beobachter 3 umfasst hierzu entsprechende mathematische Modelle. Der aus den Fahrervorgaben berechnete Soll-Wert M_{L_Soll} hat vorzugsweise die Einheit eines Moments [Nm] und beschreibt dasjenige Lenkmoment, das der Fahrer im stabilen Fahrzustand am Lenkrad 13 ausüben müsste.

Die Sensorik des Reglersystems 1 umfasst mehrere Rad-Drehzahlsensoren 5, einen Lenkwinkelsensor 8, einen Vordrucksensor 15 (Bremsdrucksensor), einen in der Lenkung 12 angeordneten Drehmomentensensor 10, sowie einen Fahrpedalsensor (integriert in der Motorsteuerung 7). Der Lenkwinkelsensor 8 ist hier in der Lenksäule 11 angeordnet, kann jedoch auch an verschiedenen anderen Orten der Lenkung, die hier insgesamt mit 12 bezeichnet ist, eingebaut sein.

Die Stellglieder des Reglersystems 1 umfassen eine Einheit 6 zur Modulation des Bremsdrucks, wie z.B. ein Hydroaggregat, und eine Motorsteuerung 7. Alternativ könnte natürlich auch ein Lenksteller vorgesehen sein.

Das Fahrzeug ist in diesem Fall mit einer elektromotorischen Lenkung EPS ausgestattet, die von Haus aus einen Drehmomentensensor 10 umfasst. Der Drehmomentensensor 10 liefert den aktuellen Ist-Wert für das Fahrverhalten. Der Soll- M_{L_Soll} und Ist-Wert M_{L} werden dem Zustandsregler 4 zugeführt, der einen automatischen Stelleingriff auslöst, wenn die Regelabweichung einen vorgegebenen Schwellenwert überschreitet.

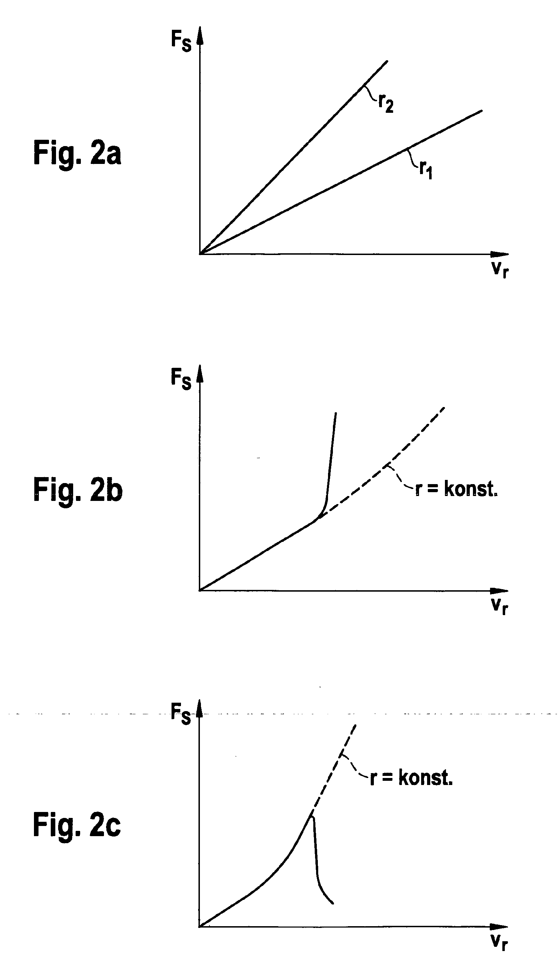

Die Regelung beruht dabei auf der Erkenntnis, dass die an den Rädern wirkende Rad-Querkraft F_{S} im stabilen Fahrzustand einen eindeutig bestimmten Wert hat, der insbesondere vom Kurvenradius und der Fahrzeuggeschwindigkeit abhängt. Wenn das Fahrzeug in eine Situation gerät, in der es über- oder untersteuert, ändert sich Rad-Querkraft F_{S}, was durch den Drehmomentensensor 10 gemessen wird. Dies wird im Folgenden anhand der Fig. 2a bis 2c deutlicher.

Fig. 2a zeigt den Verlauf der Rad-Querkraft F_{S}, abhängig von der Fahrzeuggeschwindigkeit vᵣ bei verschiedenen Kurvenradien r₁, r₂. Dabei gilt r₁ > r₂. Wie zu erkennen ist, hängt die Rad-Querkraft F_{S} bei ansonsten konstant angenommenen Bedingungen (insbesondere konstantem Reibwert zwischen Rad und Fahrbahn) lediglich vom Kurvenradius r und der Fahrzeuggeschwindigkeit vᵣ ab.

Fig. 2b zeigt im Vergleich dazu den Verlauf der Rad-Querkraft F_{S}, in einer Situation, in der das Fahrzeug untersteuert. Wie zu erkennen ist, nimmt die Rad-Querkraft F_{S} gegenüber dem Normalwert (gestrichelt dargestellt) bei stationärer Kreisfahrt stark zu.

Fig. 2c zeigt dagegen den Verlauf der Rad-Querkraft F_{S} bei einem übersteuernden Fahrzeug. Die Rad-Querkraft F_{S} nimmt in diesem Fall gegenüber dem Normalwert (gestrichelt) stark ab.

Die Zu- bzw. Abnahme der Radkräfte wird über die Lenkung 12 auf das Lenkrad 13 übertragen und wird entsprechend auch vom Drehmomentensensor 10 detektiert. Die Abweichung des Ist- vom Sollwert ist dabei ein Maß für das Über- bzw. Untersteuern des Fahrzeugs. Aus dem Vorzeichen der Kraftänderung bzw. der Abweichung vom Soll-Wert kann darüber hinaus erkannt werden, ob das Fahrzeug über- oder untersteuert.

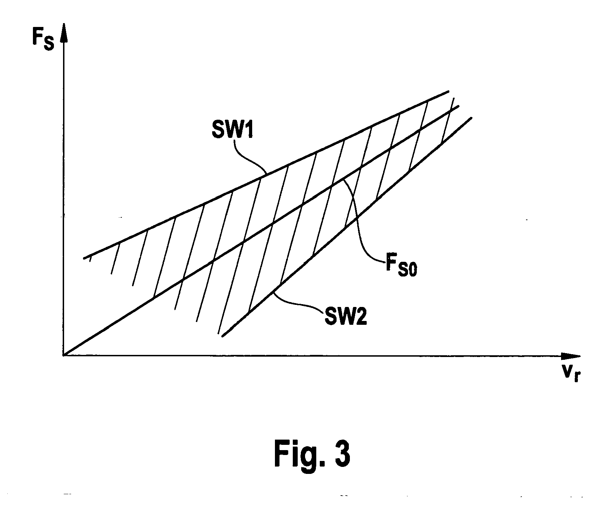

Der Fahrzeugregler 4 greift in den Fahrbetrieb ein, wenn die Abweichung ΔF_{S} bzw. die Momentenabweichung ΔM eine vorgegebene Schwelle überschreitet. Fig. 3 zeigt die Grenzwerte SW₁ und SW₂ der Regelung, bei deren Überschreiten der Regel 4 in den Fahrbetrieb eingreift. Die Grenzwerte SW₁, SW₂ definieren dabei ein bestimmtes Band um den bei stabiler Kreisfahrt zu erwartenden Wert der Rad-Querkraft F_{S}.

Die Grenzwerte SW₁, SW₂ sind so auszulegen, dass das Fahrzeug in einer kritischen Fahrsituation für einen Durchschnittsfahrer möglichst beherrschbar bleibt. Wegen der bei hohen Geschwindigkeiten potentiell größeren Gefahr ist die Regelschwelle hier für hohe Geschwindigkeit vᵣ tendenziell niedriger angesetzt als für niedrigere Geschwindigkeiten vᵣ. Das Band wird daher bei höheren Geschwindigkeiten schmäler.

## Patentansprüche

1. Fahrzeugregler (1) zum Stabilisieren eines Fahrzeugs in einer fahrdynamischen Grenzsituation, insbesondere wenn das Fahrzeug über- oder untersteuert, umfassend ein Steuergerät (2) mit einem Regelalgorithmus (3, 4),
enthaltend eine Einheit (3), die das Signal (M_{L}) eines in der Lenkung angeordneten Drehmomentensensors (10) auswertet und auf Grundlage des Sensorsignals (M_{L}) ein Über- oder Untersteuern des Fahrzeugs erkennt, **dadurch gekennzeichnet, dass**
- das Signal (M_{L}) des Drehmomentensensors (10) einen Ist-Wert definiert, der ein Maß für die an einem Rad wirkende Querkraft (F_{S}) ist,
- die Einheit (3) einen Soll-Wert (M_{L_Soll}) berechnet, der ein Maß für die im stabilen Fahrzustand zu erwartende Rad-Querkraft (F_{S}) ist, und
- aus der Abweichung zwischen Ist- (M_{L}) und Soll-Wert (M_{L_Soll}) das Über- bzw. Untersteuern des Fahrzeugs ermittelt.

2. Fahrzeugregler nach Anspruch 1, **dadurch gekennzeichnet, dass** kein Gierraten und/oder Beschleunigungssensor vorgesehen ist, um das fahrdynamische Verhalten des Fahrzeugs zu bestimmen.

3. Fahrzeugregler nach einem der vorhergehenden Ansprüche, **dadurch gekennzeichnet, dass** ein automatischer Stelleingriff ausgelöst wird, wenn die Abweichung zwischen dem Ist- (M_{L_Ist}) und dem Soll-Wert (M_{L_Soll}) eine vorgegebene Auslöseschwelle überschreitet.

4. Fahrzeugregler nach Anspruch 3, **dadurch gekennzeichnet, dass** die Auslöseschwelle (SW1,SW2) geschwindigkeitsabhängig ist.

5. Fahrzeugregler nach einem der vorhergehenden Ansprüche, **dadurch gekennzeichnet, dass** der zu erwartende Soll-Wert (M_{L_Soll}) auf Grundlage der aktuellen Fahrzeuggeschwindigkeit (vₓ) und des aktuellen Lenkwinkels (δ_{L}) berechnet wird.

6. Fahrzeugregler nach einem der vorhergehenden Ansprüche, **dadurch gekennzeichnet, dass** der Drehmomentensensor (10) der Sensor einer elektromotorisch unterstützten Lenkung (EPS) ist, der für den genannten Zweck genutzt wird.

7. Verfahren zum Stabilisieren eines Fahrzeugs in einer fahrdynamischen Grenzsituation, insbesondere wenn das Fahrzeug über- oder untersteuert, bei dem das aktuelle Fahrverhalten des Fahrzeugs mittels einer Sensorik (4, 5, 10) überwacht und mit einem Soll-Verhalten verglichen wird, wobei das Signal (M_{L}) eines in der Lenkung angeordneten Drehmomentssensors (10) ausgewertet und auf Grundlage des Sensorsignals (M_{L}) ein Über- oder Untersteuern des Fahrzeugs erkannt wird, **dadurch gekennzeichnet, dass** aus dem Signal (M_{L}) des Drehmomentensensors (10) ein Ist-Wert (M_{L_Ist}) definiert wird, und ferner ein Soll-Wert (M_{L_Soll}) berechnet wird, der ein Maß für die im stabilen Fahrzustand zu erwartende Rad-Querkraft (F_{S}) ist, und aus der Abweichung zwischen dem Ist- und dem Soll-Wert ein Über- oder Untersteuern des Fahrzeugs erkannt wird.

## Claims

1. Vehicle regulator (1) for stabilizing a vehicle in a driving dynamics borderline situation, in particular when the vehicle oversteers or understeers, comprising a control unit (2) with a control algorithm (3, 4), containing a unit (3) which evaluates the signal (M_{L}) of a torque sensor (10) which is arranged in the steering system, and detects oversteering or understeering of the vehicle on the basis of the sensor signal (M_{L}), **characterized in that**
- the signal (M_{L}) of the torque sensor (10) defines an actual value which is a measure of the lateral force (F_{S}) acting on a wheel,
- the unit (3) calculates a set point value (M_{L_setp}) which is a measure of the wheel lateral force (F_{S}) to be expected in the stable driving state, and
- the oversteering and understeering of the vehicle is determined from the deviation between the actual value (M_{L}) and the set point value (M_{L_setp}).

2. Vehicle regulator according to Claim 1, **characterized in that** no yaw rate sensor and/or acceleration sensor is provided for determining the driving dynamics behaviour of the vehicle.

3. Vehicle regulator according to one of the preceding claims, **characterized in that** an automatic actuating intervention is triggered if the deviation between the actual value (M_{L_act}) and the set point value (M_{L_setp}) exceeds a predefined triggering threshold.

4. Vehicle regulator according to Claim 3, **characterized in that** the triggering threshold (SW1, SW2) is speed-dependent.

5. Vehicle regulator according to one of the preceding claims, **characterized in that** the set point value (M_{L_setp}) to be expected is calculated on the basis of the current vehicle speed (vₓ) and the current steering angle (δ_{L}).

6. Vehicle regulator according to one of the preceding claims, **characterized in that** the torque sensor (10) is the sensor of an electromotively assisted steering system (EPS) which is used for the specified purpose.

7. Method for stabilizing a vehicle in a driving dynamics borderline situation, in particular if the vehicle oversteers or understeers, in which the current driving behaviour of the vehicle is monitored by means of a sensor system (4, 5, 10) and is compared with a set point behaviour, wherein the signal (M_{L}) of a torque sensor (10) which is arranged in the steering system is evaluated and oversteering or understeering of the vehicle is detected on the basis of the sensor signal (M_{L}), **characterized in that** an actual value (M_{L_act}) is defined on the basis of the signal (M_{L}) of the torque sensor (10), and in addition a set point value (M_{L_setp}) which is a measure of the wheel lateral force (F_{S}) to be expected in the stable driving state, is calculated, and oversteering or understeering of the vehicle is detected from the deviation between the actual value and the set point value.

## Revendications

1. Régulateur de véhicule (1) pour stabiliser un véhicule dans une situation dynamique de conduite limite, notamment lorsque le véhicule est en survirage ou en sous-virage, comprenant un contrôleur (2) avec un algorithme de régulation (3, 4), comprenant une unité (3) qui interprète le signal (M_{L}) d'un détecteur de couple (10) disposé dans la direction et détecte un survirage ou un sous-virage du véhicule en se basant sur le signal du détecteur (M_{L}), **caractérisé en ce que**
- le signal (M_{L}) du détecteur de couple (10) définit une valeur réelle qui est une mesure de la force transversale (F_{S}) agissant sur une roue,
- l'unité (3) calcule une valeur de consigne (M_{L_soll}) qui est une mesure de la force transversale de roue (F_{S}) attendue dans une situation de conduite stable et
- détermine le survirage ou le sous-virage du véhicule à partir de l'écart entre la valeur réelle (M_{L}) et la valeur de consigne (M_{L_soll}).

2. Régulateur de véhicule selon la revendication 1, **caractérisé en ce qu'**aucun détecteur de taux de lacet et/ou d'accélération n'est prévu pour déterminer le comportement dynamique de conduite du véhicule.

3. Régulateur de véhicule selon l'une des revendications précédentes, **caractérisé en ce qu'**une intervention de commande automatique est déclenchée lorsque l'écart entre la valeur réelle (M_{L_ist}) et la valeur de consigne (M_{L_soll}) dépasse un seuil de déclenchement prédéfini.

4. Régulateur de véhicule selon la revendication 3, **caractérisé en ce que** le seuil de déclenchement (SW1, SW2) dépend de la vitesse.

5. Régulateur de véhicule selon l'une des revendications précédentes, **caractérisé en ce que** la valeur de consigne (M_{L_soll}) attendue est calculée en se basant sur la vitesse actuelle du véhicule (vₓ) et sur l'angle de direction (δ_{L}) actuel.

6. Régulateur de véhicule selon l'une des revendications précédentes, **caractérisé en ce que** le détecteur de couple (10) est le détecteur d'une direction à assistance électromotorisée (EPS) qui est utilisé pour le but indiqué.

7. Procédé de stabilisation d'un véhicule dans une situation dynamique de conduite limite, notamment lorsque le véhicule est en survirage ou en sous-virage, selon lequel le comportement de conduite actuel du véhicule est surveillé au moyen d'un dispositif de détection (4, 5, 10) et comparé avec un comportement de consigne, le signal (M_{L}) d'un détecteur de couple (10) disposé dans la direction étant interprété et un survirage ou un sous-virage du véhicule étant détecté en se basant sur le signal du détecteur (M_{L}), **caractérisé en ce qu'**une valeur réelle (M_{L_ist}) est définie à partir du signal (M_{L}) du détecteur de couple (10) et une valeur de consigne (M_{L_soll}) étant en outre calculée, laquelle est une mesure de la force transversale de roue (F_{S}) attendue dans une situation de conduite stable et un survirage ou un sous-virage du véhicule étant détecté à partir de l'écart entre la valeur réelle et la valeur de consigne.
